**Europäisches Patentamt**

**European Patent Office**

**Office européen des brevets**

(19)

(11) Numéro de publication: **0 197 835**
**B1**

(12) # FASCICULE DE BREVET EUROPEEN

(45) Date de publication du fascicule du brevet:
16.05.90

(51) Int. Cl.⁵: **H02J 13/00**

(21) Numéro de dépôt: **86400625.9**

(22) Date de dépôt: **25.03.86**

(54) **Dispositif de gestion de la distribution d'énergie électrique.**

(30) Priorité: **03.04.85 FR 8505215**

(43) Date de publication de la demande:
**15.10.86 Bulletin 86/42**

(45) Mention de la délivrance du brevet:
**16.05.90 Bulletin 90/20**

(84) Etats contractants désignés:
**AT BE CH DE GB IT LI NL SE**

(56) Documents cités:
**FR-A- 2 495 396**
**GB-A- 2 050 662**
**US-A- 3 629 657**
**US-A- 4 215 276**

(73) Titulaire: **MERLIN GERIN, Rue Henri Tarze,
F-38050 Grenoble Cédex(FR)**

(72) Inventeur: **Roulet-Dubonnet, Jean-Pierre, Merlin Gerin,
F-38050 Grenoble Cedex(FR)**

(74) Mandataire: **Kern, Paul et al, Merlin Gerin Sce.
Brevets 20, rue Henri Tarze, F-38050 Grenoble
Cédex(FR)**

## Description

L'invention est relative à une installation de télécommande centralisée selon le préambule de la revendication 1.

La gestion de la distribution de l'énergie nécessite une centralisation des commandes et des informations relatives à l'état du réseau de distribution. A cet effet, une interconnexion des appareils de commande et d'exécution des instructions est indispensable et dans les documents GB-A 2 050 662 et FR-A 2 495 396 il a déjà été proposé de faire usage du réseau de distribution pour le transfert de données et de signaux de commande, notamment à haute fréquence, pour la réalisation d'une installation de télécommande conforme au préambule de la revendication 1. Des bruits et des parasites sont inévitables et les risques de pollution de l'ensemble du réseau limitent les possibilités d'emploi de ces techniques.

Une autre solution consiste dans une liaison individuelle de chacun des appareils à un poste central par des circuits de commande indépendants du réseau, ce qui se traduit par une filerie d'autant plus importante que la complexité et la fiabilité de l'installation nécessitent des circuits de contrôle ou redondants et des signalisations à distance.

La présente invention a pour but de permettre la réalisation d'un système de gestion économique et facile à mettre en œuvre. Ce but est réalisé par la mise en œuvre des caractéristiques mentionnées dans la revendication 1.

En reliant l'ensemble des appareils et le poste central par une simple ligne bifilaire, agencée en bus de transfert de données et en ligne de transport de l'énergie des circuits auxiliaires, notamment de commande des actionneurs, la longueur de la filerie est notablement réduite. Le raccordement des appareils est facilité et une extension de l'installation s'opère par un simple pontage sur un appareil voisin. Le raccordement utilise des fils standard et les technologies traditionnelles de l'installation.

Le document US-A 4 215 276 décrit une installation de télécommande d'un réseau de distribution électrique dont les interrupteurs sont pilotés par des décodeurs, interconnectés entre eux et avec des codeurs par un câble à trois conducteurs. Chaque codeur émet un signal codé personnel, qui est transmis simultanément avec un signal d'horloge, par le câble aux différents décodeurs, capables de sélectionner les messages qui leur sont destinés et de commander les interrupteurs. Les codeurs et décodeurs comportent chacun un condensateur chargé par le signal d'horloge, transmis par le câble à trois conducteurs et le condensateur alimente les circuits électroniques de ces codeurs et décodeurs. L'interrupteur peut commander un actionneur électromécanique lui-même alimenté par le réseau. Cette installation est compliquée et des situations erratiques, dues à des absences de tension du réseau, sont inévitables.

L'alimentation de l'ensemble des circuits auxiliaires, comprenant les actionneurs, par une même source d'énergie permet l'emploi d'une batterie ou d'un groupe de secours pour assurer la continuité de l'alimentation. On évite ainsi des changements d'état intempestifs lors d'une interruption de courant ou d'une mise sous tension.

Selon un développement de l'invention, la ligne bifilaire est raccordée au réseau avec interposition d'un filtrage bidirectionnel qui évite à la fois la pollution du réseau par les signaux de la ligne et le transfert de parasites du réseau vers la ligne.

Le poste central émetteur est avantageusement un automate à sortie série, qui comporte un clavier de programmation ou de commande, intégré ou indépendant de l'automate. L'automate est relié à la ligne bifilaire par un modulateur-démodulateur pour l'emission d'informations codées, notamment d'ordres de changement d'état, de réarmement et analogues, aux différents appareils et pour la réception d'informations transmises par la ligne bifilaire. Les informations émanent soit des appareils et concernent par exemple la position des contacts, la valeur du courant, la nature du défaut ou analogues, soit de capteurs indépendants qui fournissent des informations sur 1installation, par exemple la température, la luminosité et analogues. A la ligne bifilaire peuvent être raccordés des systèmes de signalisation ou des donneurs d'ordres indépendants du poste central.

Les appareils télécommandés comportent un actionneur des contacts, par exemple un électroaimant qui ouvre ou ferme les contacts à chaque impulsion de courant à la manière d'un télérupteur ou qui fonctionne en tout ou rien, tel un contacteur. D'autres actionneurs à deux électro-aimants, l'un d'ouverture et l'autre de fermeture des contacts ou à moteurs d'actionnement sont utilisables.

Selon un développement de l'invention, l'appareil de connexion assure également la protection de l'installation au moyen d'un déclencheur qui ouvre automatiquement l'appareil en cas de défaut comme un disjoncteur.

L'actionneur comporte un relais de liaison à la ligne bifilaire et ce relais, avantageusement statique tel un triac, est piloté par un bloc électronique de l'appareil. Le bloc électronique est également relié à la ligne bifilaire pour l'alimentation des circuits électroniques et la réception des informations codées transmises par la ligne. Le bloc électronique émet un signal de commande du triac à la réception d'un signal correspondant. Les informations codées sont des messages à adresse pour une commande sélective des appareils reliés à la ligne bifilaire, chaque message étant constitué par un train d'impulsions à haute fréquence. De tels messages ainsi que leurs émetteurs et récepteurs sont bien connus des spécialistes des systèmes de transmission.

La ligne bifilaire ou bus transmet également des informations concernant l'installation, par exemple des informations relatives aux appareils, lesquels sont équipés de capteurs et d'un émetteur de signaux codés. Les capteurs peuvent indiquer la position des contacts, l'intensité du courant traversant l'appareil, etc., et les informations correspondantes sont reçues par le poste central ou les autres appareils intéressés où elles sont exploitées.

Selon le type d'installation, d'autres organes périphériques sont raccordés à la ligne bifilaire tels que des blocs de signalisation et d'affichage et des postes auxiliaires de commande.

D'autres avantages et caractéristiques ressortiront plus clairement de la description qui va suivre de différents modes de mise en oeuvre de l'invention, donnés à titre d'exemples non limitatifs et représentés aux dessins annexés dans lesquels :

- la figure 1 représente le schéma électrique d'un réseau de distribution d'énergie électrique selon l'invention;
- les figures 2 à 5 sont des schémas blocs, représentant respectivement le poste central émetteur-récepteur, l'appareil de connexion, le bloc de signalisation et un bloc de mesure selon la figure 1.

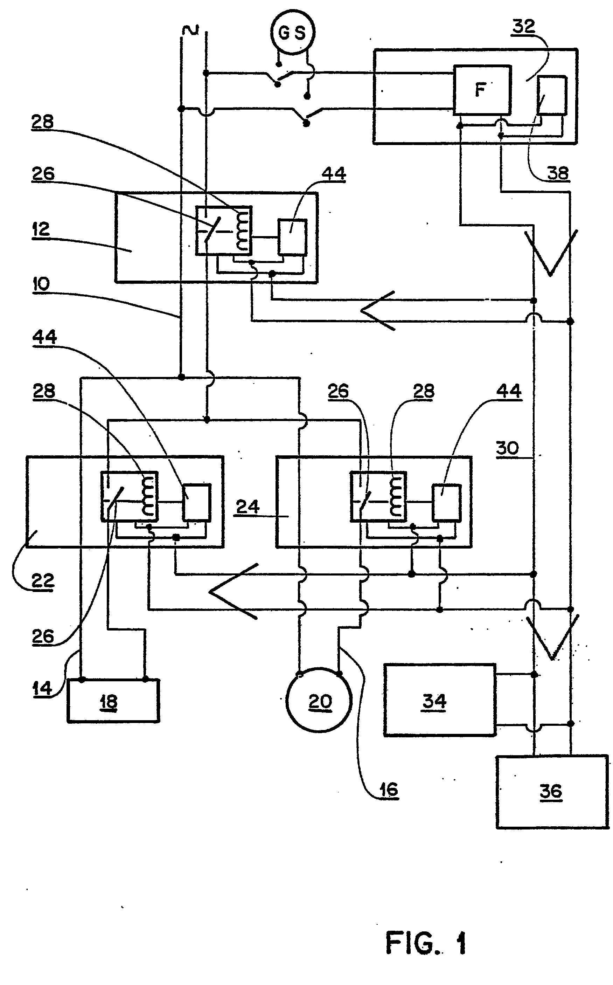

Sur les figures, un réseau 10 de distribution d'énergie électrique comporte, disposé en tête du réseau, un appareil de connexion, en l'occurrence un disjoncteur télécommandable 12, et deux branches 14, 16 alimentant respectivement des charges 18, 20, chacune protégée par un disjoncteur télécommandable 22, 24, analogue au disjoncteur 12. Les disjoncteurs 12, 22, 24 sont des disjoncteurs standard, par exemple à boîtier moulé, ayant chacun une paire de contacts 26 par phase, actionnée par un mécanisme d'ouverture et de fermeture manuelle et de déclenchement automatique sur défaut. Le schéma selon la fig. 1 est un schéma monophasé à une seule paire de contacts par disjoncteur, mais il est clair que l'invention pourrait aussi bien s'appliquer à des circuits triphasés ou multiphasés. Chaque disjoncteur 12, 22, 24 comporte de plus un dispositif de commande à distance, schématiquement représenté par une bobine 28 d'un électro-aimant, susceptible d'actionner le contact 26. Le disjoncteur 12, 22, 24 peut être du type décrit dans la demande de brevet français No 2.535.520, dans lequel l'électro-aimant 28 provoque un changement de position du contact 26 à chaque impulsion de courant. Il est clair que l'électro-aimant peut être du type monostable provoquant la fermeture du contact 26 lorsqu'il est alimenté et l'ouverture automatique en position de repos de la manière usuelle dans les contacteurs électriques. Il est bien entendu possible de prévoir deux électro-aimants, l'un commandant la fermeture des contacts 26, et l'autre leur ouverture ou tout autre système électromécanique d'actionnement des contacts.

Au circuit de puissance 10, 14, 16 de l'installation est associé un système de télétransmission comprenant une ligne bifilaire 30 ou bus de liaison entre les disjoncteurs 12, 22, 24, et un poste central émetteur 32. A la ligne bifilaire 30 sont raccordés d'autres organes périphériques, en l'occurrence un bloc de télésignalisation 34 et un bloc capteur 36. D'autres appareils, notamment des disjoncteurs 12, 22, 24 ou des postes de commande ou de signalisation, peuvent être raccordés à la ligne bifilaire 30, le système étant facilement extensible par simple pontage sur un appareil adjacent.

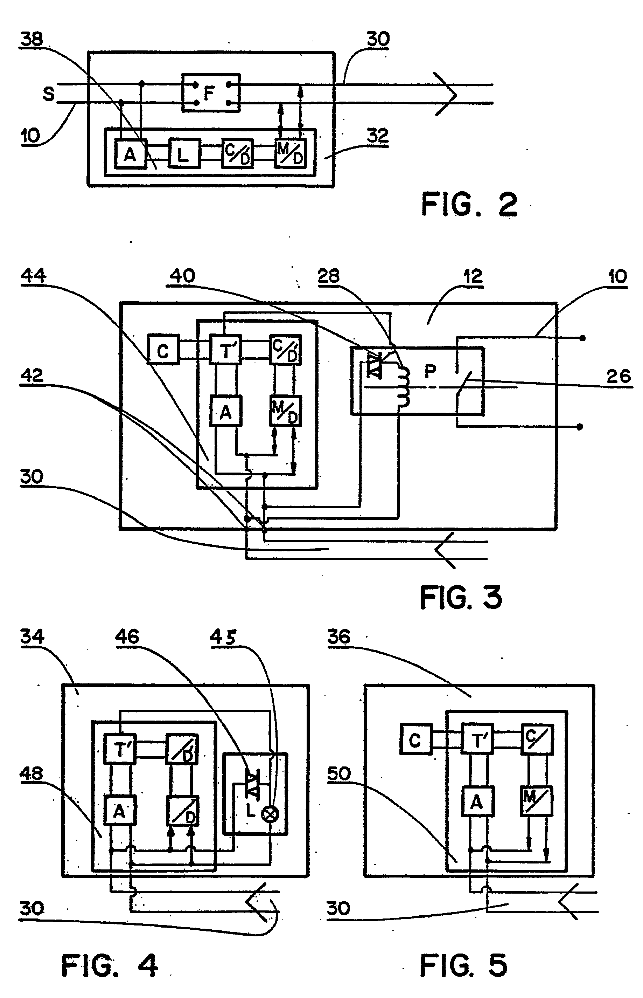

En se référant plus particulièrement à la figure 2, on voit que la ligne bifilaire 30 est reliée au réseau 10 par l'intermédiaire d'un filtre F incorporé au poste central 32. Le filtre peut bien entendu être indépendant du poste 32 ou être logé dans un boîtier séparé accolé à celui du poste 32. Le filtre F est un transformateur ou un filtre LC passe bas empêchant la pollution du réseau 10 par des signaux à haute fréquence, par exemple dune centaine de KHz transmis par la ligne bifilaire 30. Le filtre F comprend avantageusement des éléments de limitation du passage des perturbations présentes sur le réseau 10 vers la ligne bifilaire 30. Ces éléments peuvent être des semi-conducteurs ou varistances d'écrêtage de sur tensions ou des organes analogues bien connus des spécialistes. Le filtre F assure une protection générale des composants électroniques du système de télétransmission à ligne bifilaire 30. Cette ligne bifilaire 30 et le filtre F sont dimensionnés pour le transport de lénergie électrique nécessaire à l'alimentation des électro-aimants 28 et des blocs électroniques du système de télétransmission. La ligne bifilaire 30 est constituée de deux fils standard utilisés habituellement dans les installations électriques de distribution terminale, notamment dans les logements. La ligne bifilaire 30 peut être alimentée par plusieurs sources d'énergie, par exemple un groupe de secours, ce qui a l'avantage de permettre les manoeuvres de l'appareillage en l'absence de tension sur le réseau.

La ligne bifilaire 30, qui véhicule l'énergie d'alimentation des circuits auxiliaires du système de télétransmission, transporte de plus les informations codées haute fréquence émises par un automate 38 du poste central 32. L'automate 38 est du type programmable à sortie série et émet des ordres groupés mais échelonnés sous forme de messages à adresse sur la ligne bifilaire 30. De tels automates 38 sont bien connus et il suffit de rappeler qu'ils comprennent une alimentation A constituée par exemple par un transformateur abaisseur de tension raccordé au réseau 10 ou éventuellement à la ligne bifilaire 30. Le bloc d'alimentation A alimente un système électronique de traitement L qui élabore les messages selon un programme prédéterminé, ces messages étant transmis par un bloc codeur-décodeur C/D et un bloc modulateur M/D à la ligne bifilaire 30. Le filtre F isole électriquement la ligne bifilaire 30 du réseau 10 évitant toute perturbation et permettant ainsi une simplification des émetteurs et récepteurs du système de télétransmission.

La figure 3 illustre l'appareil de connexion 12, en l'occurrence le disjoncteur 12, les disjoncteurs 22 et 24, qui sont identiques, n'étant pas décrits en détail par la suite. On reconnaît le circuit de puissance 10 avec les contacts 26 télécommandé par l'électro-aimant 28. Le mécanisme de commande des contacts 26 n'est pas représenté, l'ensemble étant regroupé dans un bloc actionneur P comprenant de plus un relais schématisé par un triac 40 monté dans le circuit d'alimentation de l'électro-aimant 28. Ce circuit d'alimentation est raccordé à la ligne bifilaire 30 par des bornes de commande 42 du disjoncteur 12. Le disjoncteur 12 comporte de plus un bloc électronique 44 raccordé également par les bornes 42 à la ligne bifilaire 30. Les signaux transmis par la ligne bifilaire 30 sont appliqués à un modulateur-démodulateur M/D puis à un codeur-décodeur C/D et traités dans un bloc électronique de traitement T susceptible d'émettre un signal de commande appliqué à la gâchette du triac 40. Le bloc électronique 44 comporte de plus une alimentation A des circuits électroniques par la ligne bifilaire 30. Le bloc de traitement T' comprend un micro-controleur masqué ou une mémoire d'enregistrement de l'adresse du disjoncteur 12 sélectionnant les informations véhiculées par la ligne bifilaire 30 et destinées au disjoncteur 12. Le bloc électronique 44 peut servir d'émetteur de données représentatives de l'état du disjoncteur 12, notamment de la position des contacts 26 ou du courant traversant le disjoncteur 12. A cet effet, un capteur C, par exemple constitué par un micro-contact solidaire des contacts principaux 26 transmet au bloc de traitement T' l'information souhaitée, cette information étant après traitement et codage dans le bloc C/D et modulation par le modulateur-démodulateur M/D transmise par la ligne bifilaire 30 vers le poste central 32 et les autres appareils reliés à la ligne bifilaire 30. Le bloc électronique 44 fonctionne à la fois comme récepteur et comme émetteur de signaux codés, la ligne 30 assurant la télétransmission des signaux de commande et de signalisation ainsi que le transport de l'énergie électrique d'actionnement des électro-aimants 28 et des circuits électroniques auxiliaires. Le poste central 32 est également agencé en récepteur de signaux d'une manière similaire à celle décrite pour le bloc électronique 44 du disjoncteur 12.

Le bloc de signalisation 34, illustré par la figure 4, permet un affichage des informations d'exploitation de l'installation et comporte à cet effet un voyant 45 branché sur la ligne bifilaire 30 par l'intermédiaire d'un triac 46 analogue au triac 40 du disjoncteur 12. Le triac 46 est piloté par un bloc électronique 48 analogue au bloc 44, mais simplifié puisqu'il fonctionne uniquement en récepteur. Les informations transmises par la ligne bifilaire 30 sont démodulées dans un bloc démodulateur puis décodées dans le bloc décodeur avant d'être transmises au bloc de traitement T'. Le fonctionnement est bien entendu identique à celui décrit ci-dessus pour la partie électronique du bloc disjoncteur 12, le bloc de signalisation 34 pouvant bien entendu comporter plusieurs voyants 45 alimentés par le même bloc électronique 48 à adressage approprié.

La figure 5 montre le bloc capteur 36 relié à la ligne bifilaire 30 pour transmettre des informations ou mesures délivrées par un capteur C. Ces informations sont transmises à un bloc électronique 50 analogue au bloc 44 du disjoncteur 12 pour traiter ces informations et les émettre après codage sur la ligne bifilaire 30. Dans ce cas, le bloc 50 fonctionne uniquement en émetteur et comporte uniquement un bloc de codage et de modulation simplifié par rapport à ceux du bloc électronique 44. Le capteur peut par exemple mesurer la luminosité pour une installation d'allumage automatique d'un éclairage ou une température pour une installation de régulation automatique de chauffage ou toute autre valeur appropriée.

L'invention est mise en oeuvre de la manière suivante :

L'installateur raccorde le circuit de puissance 10, 14, 16 aux bornes de puissance des disjoncteurs 12, 22, 24 de la manière usuelle. Parallèlement il raccorde les bornes de commande 42 des disjoncteurs 12, 22, 24 à la ligne bifilaire 30 constituée par des fils standard d'une section appropriée. La ligne bifilaire 30 est de plus raccordée au poste central 32 et aux organes périphériques 34, 36, le poste central 32 étant de plus relié au réseau 10. L'automate 38 transmet les ordres codés de commande des disjoncteurs 12, 22, 24 dont les blocs électroniques 44 sélectionnent les ordres qui leur sont adressés pour activer l'électro-aimant 28 provoquant l'ouverture ou la fermeture des contacts 26. L'automate 38 interroge cycliquement les disjoncteurs 12, 22, 24 ainsi que le bloc capteur 36 pour disposer des informations de commande de l'installation. Le poste central 32 peut comporter un bloc d'affichage et de signalisation analogue à celui représenté à la figure 4, permettant une supervision de l'état ou des opérations effectuées sur l'installation. Le filtre F du poste central 32 évite une pollution du réseau 10 par les signaux codés à haute fréquence transitant sur la ligne bifilaire 30. Le filtre F évite de plus toute surtension sur la ligne bifilaire 30 transmise par le réseau 10. L'installation peut être très étendue, la seule liaison entre les composants étant les circuits de puissance et la ligne bifilaire 30.

Il est clair que lesdisjoncteurs 12, 22, 24 peuvent être équipés d'auxiliaires, par exemple d'un bouton poussoir de commande du triac 40 ou d'un voyant de signalisation ou d'affichage, et que l'installation peut comporter d'autres appareils du type contacteur ou effecteur n'assurant pas la protection des circuits en cas de défaut. Les éléments constitutifs de l'installation sont avantageusement disposés dans des boîtiers moulés de profil standard, par exemple encliquetable sur un rail DIN symétrique. Il est clair que le bloc électronique peut être indépendant de l'actionneur, les deux blocs étant avantageusement voisins pour limiter les connexions entre eux. D'une manière analogue, le filtre F peut être dissocié de l'automate 38 en étant logé dans un boîtier indépendant pouvant fort bien être éloigné du boîtier de logement de l'automate 38.

Selon un développement de l'invention, la ligne bifilaire 30 est reliée à un bloc d'alimentation continue (non représenté) suppléant une défaillance du réseau 10. Ce bloc d'alimentation peut être une simple batterie permettant d'assurer la continuité des ordres et de l'alimentation des actionneurs des disjoncteurs 12, 22, 24. Cette permanence de l'alimentation évite des situations erratiques pouvant être catastrophiques au moment de la remise sous tension du réseau 10.

## Revendications

1. Installation de télécommande centralisée pour la gestion de la distribution de l'énergie électrique, ayant des appareils (12, 22, 24) dont chacun comporte des contacts électriques (26) de connexion de circuits utilisateurs (14, 16) au réseau (10) de distribution d'énergie électrique, un actionneur (28) électromécanique d'actionnement desdits contacts électriques (26) et un bloc électronique (44) de réception et de traitement de signaux codés de télécommande émis par un poste central émetteur (32), pour transmettre un ordre d'actionnement des contacts (26) audit actionneur (28), lors de la réception d'un signal prédéterminé, caractérisée en ce que chaque appareil comprend des bornes de puissance de raccordement audit réseau et des bornes de commande (42) de raccordement à une ligne bifilaire (30) isolé électriquement du réseau, cette ligne reliant ledit poste central émetteur (32) à chaque appareil (12, 22, 24) et que ledit actionneur (28) et ledit bloc électronique (44) sont tous deux raccordés auxdites bornes de commandes pour recevoir par ladite ligne bifilaire (30) d'une part l'énergie d'alimentation de l'actionneur (28) et d'autre part lesdits signaux codés de télécommande.

2. Installation selon la revendication 1, caractérisée en ce que ladite ligne bifilaire (30) comporte deux fils, de section appropriée au transport de l'énergie d'alimentation desdits actionneurs (28), lesdits fils étant raccordés au réseau électrique (10) avec interposition d'un filtre (F) ou transformateur, antiparasite dans la gamme des fréquences desdits signaux.

3. Installation selon la revendication 1 ou 2, caractérisée en ce que ladite ligne bifilaire (30) est raccordée à une source d'alimentation indépendante ou de secours dudit réseau pour assurer la continuité de l'alimentation des actionneurs (28).

4. Installation selon la revendication 1, 2 ou 3, caractérisée en ce que ledit poste central émetteur (32) comporte une unité programmable (38) ayant une sortie série asynchrone, couplée à ladite ligne bifilaire (30) par un modulateur-démodulateur (M/D) pour la transmission desdits signaux codés.

5. Installation selon la revendication 4, caractérisée en ce que ledit actionneur (28) est doté d'un relais (40) de liaison auxdites bornes de commande et que ledit bloc électronique (44) à circuit démodulateur (D) de liaison auxdites bornes de commande comporte un circuit de traitement (T) des signaux transmis par la ligne bifilaire (30) pour engendrer un ordre de commande dudit relais (40).

6. Installation selon la revendication 5, caractérisée en ce que le bloc électronique (44) comporte un décodeur (D) de réception des signaux codés, notamment un microcontrôleur masqué de lecture des signaux pour la commande dudit actionneur (28).

7. Installation selon la revendication 5 ou 6, caractérisée en ce que ledit appareil (12, 22, 24) comporte des capteurs (C) fournissant audit bloc électronique (44) des informations qui sont transmises, après codage par un émetteur incorporé audit bloc électronique, par ladite ligne bifilaire à un poste central récepteur (32) de ladite installation.

8. Installation selon la revendication 7, caractérisée en ce que le poste central émetteur (32) est de plus agencé en poste central récepteur pour une centralisation des commandes et signalisations.

9. Installation selon l'une quelconque des revendications précédentes, caractérisée en ce que le signal codé est un signal haute fréquence à train d'impulsions formant un message à adresse.

10. Installation selon l'une quelconque des revendications précédentes, caractérisée en ce qu'elle comporte des postes (36) capteurs raccordés à ladite ligne bifilaire (30) comprenant un capteur (C) d'informations locales et un émetteur alimenté par la ligne bifilaire (30) pour transmettre des données représentatives desdites informations locales par la ligne bifilaire.

## Claims

1. A centralized remote control installation for electrical power distribution management, having devices (12, 22, 24) each of which comprises electrical contacts (26) connecting user circuits (14, 16) to the electrical power distribution mains (10), an electromagnetic actuator (28) actuating said electrical contacts (26) and an electronic receiver and processing unit (44) of the coded remote control signals sent by a central transmitter station (32), to transmit an actuating order of the contacts (26) to said actuator (28), when a predetermined signal is received, characterized in that each device comprises power terminals for connection to said mains and control terminals (42) for connection to a two-wire line (30) electrically insulated from the mains, this line connecting said central transmitter station (32) to each device (12, 22, 24) and that said actuator (28) and said electronic unit (44) are both connected to said control terminals to receive via said two-wire line (30) both the power supply of the actuator (28) and said coded remote control signals.

2. The installation according to claim 1, characterized in that said two-wire line (30) comprises two wires, of a suitable cross-section to transport the power supply to said actuators (28), said wires being connected to the electrical mains (10) with a filter (F) or transformer interposed, to filter interference in the frequency range of said signals.

3. The installation according to claim 1 or 2, characterized in that said two-wire line (30) is connected to an independent or standby power supply source of said mains to ensure continuity of the power supply to the actuators (28).

4. The installation according to claim 1, 2 or 3, characterized in that said central transmitter station (32) comprises a programmable unit (38) having an asynchronous serial output, coupled to said two-wire line (30) by a modulator/demodulator (M/D) for transmission of said coded signals.

5. The installation according to claim 4, characterized in that said actuator (28) is equipped with a connecting relay (40) to said control terminals and that said electronic unit (44) with a demodulator circuit (D) connecting to said control terminals comprises a processing circuit (T) of the signals transmitted via the two-wire line (30) to generate a control order of said relay (40).

6. The installation according to claim 5, characterized in that the electronic unit (44) comprises a receipt decoder (D) of the coded signals, notably a masked signal-reading microcontroller for control of said actuator (28).

7. The installation according to claim 5 or 6, characterized in that said device (12, 22, 24) comprises sensors (C) supplying to said electronic unit (44) information which is transmitted, after coding by a transmitter incorporated in said electronic unit, via said two-wire line to a central receiver station (32) of said installation.

8. The installation according to claim 7, characterized in that the central transmitter station (32) is in addition arranged as a central receiver station for centralization of the orders and signallings.

9. The installation according to any one of the above claims, characterized in that the coded signal is a high-frequency pulse train signal forming an address message.

10. The installation according to any one of the above claims, characterized in that it comprises sensor stations (36) connected to said two-wire line (30) comprising a local information sensor (C) and a transmitter supplied by the two-wire line (30) to transmit data representative of said local information via the two-wire line.

## Patentansprüche

1. Zentrale ferngesteuerte Einrichtung für die elektrische Lastverteilung mit Geräten (12, 22, 24), von denen jedes elektrische Kontakte (26) aufweist zum Anschluß der Verbraucher-Stromkreise (14, 16) an das elektrische Energieverteilungsnetz (10), mit einem elektromechanischen Antrieb (28) zur Betätigung der genannten elektrischen Kontakte (26) und mit einem elektronischen Block (44) zum Empfang und zur Verarbeitung von kodierten Fernsteuer-Signalen, die von einer zentralen Sendestation (32) abgegeben werden, um einen Betätigungsbefehl der Kontakte (26) an den genannten Antrieb (28) zu übertragen, bei Empfang eines vorbestimmten Signals, dadurch gekennzeichnet, daß jedes Gerät Leistungsklemmen aufweist zum Anschluß an das genannte Netz sowie Steuerklemmen (42) zum Anschluß an eine Zweidrahtleitung (30), die elektrisch vom Netz isoliert ist, wobei diese Leitung die genannte zentrale Sendestation (32) mit jedem Gerät (12, 22, 24) verbindet, und daß der genannte Antrieb (28) und der genannte elektronische Block (44) alle beide mit den genannten Steuerklemmen verbunden sind, um mittels der genannten Zweidrahtleitung (30) einerseits die Versorgungsenergie des Antriebes (28) und andererseits die genannten kodierten Fernsteuersignale zu empfangen.

2. Einrichtung gemäß Anspruch 1, dadurch gekennzeichnet, daß die genannte Zweidrahtleitung (30) zwei Drähte aufweist mit einem Durchschnitt, der für den Transport der Versorgungsenergie der genannten Antriebe (28) geeignet ist, wobei die genannten Drähte mit dem elektrischen Stromnetz (10) verbunden sind mit Einfügung eines Entstör-Filters (F) oder -Transformators in dem Frequenzbereich der genannten Signale.

3. Einrichtung gemäß Anspruch 1 oder 2, dadurch gekennzeichnet, daß die genannte Zweidrahtleitung (30) mit einer unabhängigen oder Hilfs-Versorgungsquelle des genannten Stromnetzes verbunden ist, um die fortlaufende Versorgung der Antriebe (28) zu gewährleisten.

4. Einrichtung gemäß Anspruch 1, 2 oder 3, dadurch gekennzeichnet, daß die genannte zentrale Sendestation (32) eine programmierbare Einheit (38) aufweist mit einem asynchronen Reihenausgang, der durch einen Modulator/-Demodulator (M/D) mit der genannten Zweidrahtleitung (30) verbunden ist zur Übertragung der genannten kodierten Signale.

5. Einrichtung gemäß Anspruch 4, dadurch gekennzeichnet, daß der genannte Antrieb (28) mit einem Relais (40) versehen ist zur Verbindung mit den genannten Steuerklemmen, und daß der genannte elektronische Block (44) mit dem Demodulationskreis (D) zur Verbindung mit den genannten Steuerklemmen einen Verarbeitungskreis (T) der durch die Zweidrahtleitung (30) übertragenen Signale aufweist, um einen Steuerbefehl des genannten Relais (40) zu erzeugen.

6. Einrichtung gemäß Anspruch 5, dadurch gekennzeichnet, daß der elektronische Block (44) einen Empfangs-Dekodierer (D) der kodierten Signale aufweist, insbesondere ein nicht sichtbarer Mikroprüfer zum Lesen der Signale, für die Steuerung des genannten Antriebs (28).

7. Einrichtung gemäß Anspruch 5 oder 6, dadurch gekennzeichnet, daß das genannte Gerät (12, 22, 24) Sensoren (C) aufweist, die dem genannten elektronischen Block (44) Informationen liefert, die nach Kodierung durch den im genannten elektronischen Block eingebauten Sender mittels der genannten Zweidrahtleitung an eine zentrale Empfangsstation (32) der genannten Einrichtung übertragen werden.

8. Einrichtung gemäß Anspruch 7, dadurch gekennzeichnet, daß die zentrale Sendestation (32) außerdem als zentrale Empfangsstation ausgebildet ist für eine Zentralisierung der Steuerungen und Signalanzeigen.

9. Einrichtung gemäß irgendeinem der vorhergehenden Ansprüche, dadurch gekennzeichnet, daß das kodierte Signal ein Hochfrequenzsignal mit Impulsfolge ist, das eine Adressenmeldung bildet.

10. Einrichtung gemäß irgendeinem der vorhergehenden Ansprüche, dadurch gekennzeichnet, daß sie Aufnahmegeräte (36) aufweist, die mit der genannten Zweidrahtleitung (30) verbunden sind, welche einen Sensor (C) örtlicher Informationen aufweist und einen von der Zweidrahtleitung (30) versorgten Sender, um die die genannten örtlichen Informationen darstellenden Werte durch die Zweidrahtleitung zu übermitteln.

FIG. 1

FIG. 2

FIG. 3

FIG. 4

FIG. 5